# EUROPÄISCHE PATENTSCHRIFT

(11) **EP 1 791 422 B1**
(45) Veröffentlichungstag und Bekanntmachung des Hinweises auf die Patenterteilung: **27.05.2009**
(21) Anmeldenummer: 05789871.0
(22) Anmeldetag: 08.09.2005
(51) Int. Cl.: A01N 1/02

(54) **STERILISATIONSVERFAHREN ZUR HERSTELLUNG VON IMPLANTIERBAREM ODER TRANSPLANTIERBAREM BIOLOGISCHEM MATERIAL**
STERILISATION METHOD FOR THE PRODUCTION OF IMPLANTABLE OR TRANSPLANTABLE BIOLOGICAL MATERIAL
PROCEDE DE STERILISATION POUR PRODUIRE DES MATIERES BIOLOGIQUES IMPLANTABLES OU TRANSPLANTABLES

(30) Priorität: 22.09.2004 DE 102004047247
(43) Veröffentlichungstag der Anmeldung: 06.06.2007
(73) Patentinhaber: AutoTissue GmbH, 14167 Berlin (DE)
(72) Erfinder: STEIN-KONERTZ, Marita, 14195 Berlin (DE); ERDBRÜGGER, Wilhelm, 12207 Berlin (DE)
(74) Vertreter: Wablat, Wolfgang
(86) Internationale Anmeldenummer: PCT/DE2005/001595
(87) Internationale Veröffentlichungsnummer: WO 2006/032240

(56) Entgegenhaltungen:
- WO-A-02/49681
- WO-A-02/096476
- WO-A-20/04052417
- US-A- 5 558 875

## Beschreibung

Die Erfindung betrifft ein Sterilisationsverfahren zur Herstellung von implantierbarem oder transplantierbarem biologischem Material tierischen oder humanen Ursprungs.

Seit langem gibt es vielfältige Bestrebungen, xenogenes oder allogenes Material zu sterilisieren und als Implantat oder Transplantat einzusetzen. Beispielsweise erfolgt die Herstellung von biologischen Herzklappen aus vom Schwein, Rind oder Pferd gewonnenem Fremdmaterial bekanntermaßen unter Verwendung von Glutaraldehyd, mit dem die Zelloberfläche versiegelt wird und das gleichzeitig eine keimtötende, sterilisierende Wirkung hat. Derart hergestellte Bioprothesen erfüllen zwar die vorgeschriebenen Sterilitätsanforderungen, sind jedoch insofern nachteilig, als es allmählich, und zwar in Abhängigkeit vom Alter des Patienten, zu einer Verkalkung und in deren Folge zur Funktionsuntüchtigkeit der Bioprothese kommen kann.

WO 2004/052417 A1 offenbart ein Verfahren zur Herstellung von Bioprothesen aus allogenem oder xenogenem Material in dem das Transplantat zuerst mit einem Detergens wie Desoxycholsäure dezellularisiert wird und danach mit zyklischen Lipoproteinen weiterbehandelt wird um eine Kollagenmatrix zu erhalten auf deren Oberfläche ein gleichmäßiges Anwachsen von aufgebrachten körpereigenen Zellen gewährleistet ist. WO 02/49681 A1 offenbart ein Verfahren zur Dezellularisierung von Fremdmaterial durch eine Behandlung mit Desoxycholsäure, spülen mit Phosphatpuffer und eine anschliessende Behandlung mit Alkohol um eine antivirale Wirkung zu erreichen und Detergensresten zu entfernen.

US 5,558,875 offenbart die Herstellung dezellularisiertes Kollagengewebes das mit 70% Alkohol konserviert wird zur Verhinderung der Nachteilen einer Glutaraldehydfixierung.

Der Erfindung liegt die Aufgabe zugrunde, ein Verfahren zur nach internationaler Norm validierten Sterilisation von biologischem Material tierischen oder humanen Ursprungs zur Bereitstellung von biologischen Implantaten oder Transplantaten anzugeben, das einen geringen Aufwand erfordert und im Hinblick auf schädliche Mikroorganismen oder eine nachträgliche Verkalkung keine Risiken aufweist.

Erfindungsgemäß wird die Aufgabe mit einem Verfahren gemäß den Merkmalen des Patentanspruchs 1 gelöst. Aus den Unteransprüchen ergeben sich weitere Merkmale und vorteilhafte Weiterbildungen der Erfindung.

Der grundlegende Erfindungsgedanke besteht darin, dass das tierische Ausgangsmaterial in einer Kombination von vier aufeinander folgenden, jeweils in einem bestimmten Zeitintervall wirksamen Verfahrensschritten zunächst in einer antibiotischen Lösung, dann in einer Desoxycholsäurelösung, danach in einer oberflächenaktiven Substanz und schließlich in einem primären Alkohol behandelt wird. Die in der jeweiligen Stufe eingesetzte Sterilisierungssubstanz wirkt dabei sowohl physikalisch, d.h. abtrennend und entfernend, als auch chemisch sterilisierend auf die jeweiligen Mikroorganismen. Dem zweiten bis vierten Behandlungsschritt ist jeweils ein Spülvorgang mit einer wässrigen Lösung, vorzugsweise einer Kochsalzlösung, zum Entfernen des Sterilisierungsmittels und der abgelösten Mikroorganismen nachgeschaltet. Wichtig ist, dass die einzelnen Sterilisationsschritte und Spülschritte in der angegebenen Reihenfolge und jeweils in einem bestimmten Zeitintervall durchgeführt werden.

Das vorgeschlagene Sterilisierungsverfahren gewährleistet eine internationalen Normen entsprechende Sterilisierung des Ausgangsmaterials, mit der ein geforderter Sicherheitsabstand von >10⁶ Keimen erreicht wird. Das so sterilisierte Biomaterial kann ohne Sicherheitsrisiko in den menschlichen Körper implantiert (bzw. transplantiert) werden. Da mit dem erfindungsgemäßen Sterilisierungsverfahren auch die für die Verkalkung verantwortlichen Phospholipide aus dem Material herausgelöst werden, besteht ein deutlich verringertes Verkalkungsrisiko. Die Lebensdauer des Implantats oder Transplantats wird erhöht.

Eine Ausführungsform des erfindungsgemäßen Verfahrens wird am Beispiel der Herstellung von Herzklappenimplantaten aus porcinem Material näher erläutert.

Eine vom Schwein entnommene Aortenklappe, die von Fett befreit und entsprechend zugeschnitten wurde, wird in einem ersten Verfahrensschritt über einen bestimmten Zeitraum in einer antibiotischen Lösung, die das Wachstum von Bakterien und Pilzen unterdrückt, gehalten. In dieser Stufe werden gleichzeitig physikalische Ablöseeffekte zur Reduktion der Mikroorganismen erzielt. Die antibiotische Lösung enthält beispielsweise Penicillin, Streptomycin und Amphotericin.

In dem darauffolgenden zweiten Verfahrensschritt wird die zuvor in dem Antibiotikum behandelte Aortenklappe in Desoxycholsäure in physiologischer Kochsalzlösung gehalten. Das Natriumdesoxylat hat eine dezellularisierende, das heißt die in dem Gewebe vorhandenen Zellen abtötende und lösende Wirkung und außerdem ebenfalls eine antibiotische Wirkung zur weiteren Verhinderung des Wachstums der Mikroorganismen.

Im Anschluss an die beiden ersten Verfahrensstufen wird die Aortenklappe mehrfach in einer wässrigen Lösung gespült, um die Desoxycholsäure und oberflächliche Keime abzuspülen.

In dem darauffolgenden (dritten) Verfahrensschritt wird die Aortenklappe in eine oberflächenaktive Substanz, nämlich ein Lipoprotein, eingebracht, das hemolytische, antivirale und antibakterielle Eigenschaften hat und das - neben der chemischen Wirkung - außerdem aufgrund seiner physikalischen Wirkung die Befestigung bzw. Abtrennung der Mikroorganismen beeinflusst.

An die Lipoproteinbehandlung schließt sich wieder ein mehrfaches Spülen in einer wässrigen Lösung an, um die aus dem vorhergehenden Schritt verbliebenen Detergenzien wegzuspülen und gleichzeitig die Keimzahl zu verringern.

Der nächste - vierte - Verfahrensschritt umfasst eine Behandlung der Aortenklappe in einem primären Alkohol, z. B. siebzigprozentigem Ethanol, der auf vegetative Zellen von Bakterien und Pilzen und auch gegen eine Hülle aufweisende Viren wirkt. Zudem werden noch vorhandene Phospholipide, die maßgeblich für die Verkalkung des biologischen Implantats verantwortlich sind, aus der Zellmembran entfernt. Auch hier finden neben der chemischen Wirkung physikalische Ablöseprozesse statt, wenn sich die porcine Herzklappe in die Behandlungschemikalie befindet.

An diesen vierten Verfahrensschritt schließt sich wieder ein mehrfacher Spülschritt in einer wässrigen Lösung an, um den Wasserhaushalt des Gewebes, das durch den Alkohol dehydriert wurde, auszugleichen und aufgrund der Verdünnungswirkung den Anteil an Bakterien und Pilzen weiter zu verringern.

Im Ergebnis der zuvor beschriebenen Behandlungsschritte zur Sterilisation einer vom Schwein stammenden Aortenklappe liegt eine nach europäischer Norm sterile Bioprothese vor, die ohne weitere Behandlung implantiert werden kann.

Die sterilisierende Wirkung des Verfahrens und die Einhaltung der entsprechenden Sterilitäts-Grenzwerte auf der Grundlage der europäischen Norm ISO 14160 wird durch akkreditierte Prüfinstitute bestätigt. Im Ergebnis der Prüfung des vorliegenden Sterilisierungsverfahrens wurde festgestellt, dass infolge der kombinatorischen - chemischen (abtötenden) und physikalischen (abtrennenden und entfernenden) - Wirkung der in den einzelnen Behandlungsstufen eingesetzten chemischen Sterilisierungsmittel in Verbindung mit den jeweiligen Spülschritten ein Sterilisationssicherheitsabstand entsprechend der europäischen Norm von mehr als 10⁶ Keimen erreicht wird.

## Patentansprüche

1. Sterilisationsverfahren zur Herstellung von transplantierbarem oder implantierbarem biologischem Material tierischen oder humanen Ursprungs, **gekennzeichnet durch** die vier in der angegebenen Reihenfolge aufeinander folgenden, chemisch und physikalisch kombinatorisch wirkenden Sterilisationsschritte:
1. Behandeln des Ausgangsmaterials in einer antibiotischen Lösung zur Vermeidung des Wachstums von Mikroorganismen und zu deren Abtrennung;
2. Weiterbehandlung des Materials in Desoxycholsäure zur Vermeidung des Wachstums der Mikroorganismen und zu deren Abtrennung, in Kombination mit einem nachgeschalteten ersten Spülvorgang in einer wässrigen Lösung zum Entfernen der Desoxycholsäure und zum oberflächlichen Abspülen der abgelösten Mikroorganismen;
3. Weiterbehandeln des Materials in einer oberflächenaktiven Lipoproteinlösung mit hemolytischer, antibakterieller, antiviraler und abtrennender Wirkung auf die Mikroorganismen sowie zum weiteren Entfernen der Desoxycholsäure, und zwar in Kombination mit einem anschließenden zweiten Spülvorgang in wässriger Lösung; und
4. Weiterbehandeln des Materials in primärem Alkohol mit fungizider, bakterizider und antiviraler Wirkung zum weiteren kombinierten Abtrennen und vollständigen Vernichten der Mikroorganismen, und zwar in Kombination mit einem anschließenden dritten Spülvorgang in wässriger Lösung.

2. Verfahren nach Anspruch 1, **dadurch gekennzeichnet, dass** die vier Sterilisationsschritte und die Spülschritte jeweils in einen vorgegebenen Zeitintervall durchgeführt werden.

3. Verfahren nach Anspruch 1, **dadurch gekennzeichnet, dass** der primäre Alkohol siebzigprozentiges Ethanol ist.

4. Verfahren nach Anspruch 1, **dadurch gekennzeichnet, dass** ein Spülvorgang mehrere aufeinander folgende Spülschritte umfasst.

5. Verfahren nach Anspruch 1, **dadurch gekennzeichnet, dass** die in den Sterilisationsschritten 1 bis 4 verwendeten chemisch und physikalisch wirkenden Sterilisierungsmittel in einer Kochsalzlösung gelöst sind.

6. Verfahren nach Anspruch 1, **dadurch gekennzeichnet, dass** als Spülmittel eine wässrige Kochsalzlösung verwendet wird.

## Claims

1. A sterilization method for producing transplantable or implantable biological material of animal or human origin, **characterized in that** it comprises four sterilization steps that succeed one another in the sequence given below and have a combined chemical and physical effect:
1. Treatment of the source material in an antibiotic solution to prevent the growth of microorganisms and to separate them;
2. Further treatment of the material in deoxycholic acid to prevent the growth of microorganisms and to separate them, in combination with a downstream first rinsing process in an aqueous solution for removing the deoxycholic acid and for rinsing the separated microorganisms from the surface;
3. Further treatment of the material in a surface-active lipoprotein solution with a hemolytic, antibacterial, antiviral, and separating effect on the microorganisms and for further removal of the deoxycholic acid, in combination with a subsequent second rinsing process in aqueous solution; and
4. Further treatment of the material in primary alcohol with a fungicidal, bactericidal, and antiviral effect for further combined separation and complete destruction of the microorganisms, in combination with a subsequent third rinsing process in aqueous solution.

2. The method according to claim 1 wherein the four sterilization steps and the rinsing steps are performed in a specified time interval.

3. The method according to claim 1 wherein 70% ethanol is used as the primary alcohol.

4. The method according to claim 1 wherein one rinsing process includes multiple successive rinsing steps.

5. The method according to claim 1 wherein the chemically and physically acting sterilization agents used in sterilization steps 1 to 4 are dissolved in a sodium salt solution.

6. The method according to claim 1 wherein an aqueous sodium salt solution is used as a detergent.

## Revendications

1. Procédé de stérilisation pour la production de matériau biologique d'origine animale ou humaine pouvant être transplanté ou implanté, **caractérisé par** les quatre étapes de stérilisation se succédant dans la séquence donnée, à action combinée chimique et physique :
1. Traitement du matériau initial dans une solution antibiotique afin d'éviter la croissance de microorganismes et en vue de leur élimination ;
2. Traitement ultérieur du matériau dans de l'acide désoxycholique afin d'éviter la croissance des microorganismes et en vue de leur élimination, en combinaison avec un premier processus de lavage en aval dans une solution aqueuse afin d'éliminer l'acide désoxycholique et de nettoyer à grande eau en surface les microorganismes dissous ;
3. Traitement ultérieur du matériau dans une solution de lipoprotéines active en surface avec action hémolytique, antibactérienne, antivirale et d'élimination sur les microorganismes ainsi que poursuite de l'élimination de l'acide désoxycholique, en combinaison avec un deuxième processus de lavage suivant dans une solution aqueuse ; et
4. Traitement ultérieur du matériau dans de l'alcool primaire avec action fongicide, bactéricide et antivirale afin de poursuivre l'élimination combinée et de détruire complètement les microorganismes, en combinaison avec un troisième processus de lavage suivant dans une solution aqueuse.

2. Procédé selon la revendication 1, **caractérisé en ce que** les quatre étapes de stérilisation et les étapes de lavage sont respectivement effectuées à un intervalle de temps prescrit.

3. Procédé selon la revendication 1, **caractérisé en ce que** l'alcool primaire est de l'éthanol à 70%.

4. Procédé selon la revendication 1, **caractérisé en ce que** un processus de lavage comprend plusieurs étapes de lavage se succédant.

5. Procédé selon la revendication 1, **caractérisé en ce que** les moyens de stérilisation à action chimique et physique utilisés aux étapes de stérilisation 1 à 4 sont dissous dans une solution de chlorure de sodium.

6. Procédé selon la revendication 1, **caractérisé en ce que** comme moyen de lavage, une solution aqueuse de chlorure de sodium est utilisée.
